(19) Europäisches Patentamt
European Patent Office
Office européen des brevets

(11) Publication number: 0 154 400 A1

(12) EUROPEAN PATENT APPLICATION

(21) Application number: 85300547.8

(22) Date of filing: 25.01.85

(51) Int. Cl.[4]: C 08 G 18/50
C 08 G 18/66, C 08 K 5/09
B 29 C 33/60

(30) Priority: 13.02.84 US 579235

(43) Date of publication of application: 11.09.85 Bulletin 85/37

(84) Designated Contracting States: BE DE GB IT NL SE

(71) Applicant: TEXACO DEVELOPMENT CORPORATION
2000 Westchester Avenue
White Plains New York 10650(US)

(72) Inventor: Dominguez, Richard Joseph Gilbert
3107 Canter Lane
Austin Texas 78759(US)

(72) Inventor: McEntire, Edward Enns
11510 June Drive
Austin Texas 78753(US)

(72) Inventor: Naylor, Carter Graham
8103 Forest Mesa Drive
Austin Texas 78761(US)

(74) Representative: Brock, Peter William et al,
Michael Burnside & Partners 2 Serjeants' Inn Fleet Street
London EC4Y 1HL(GB)

# (54) Reaction injection moulded elastomers containing high molecular weight organic acids.

(57) Reaction injection moulded (RIM) elastomers derived from high molecular weight amine-terminated polyethers, a chain extender and a polyisocyanate exhibit improved tear strength and mould release properties when they include an acid of the formula

$$R(CO_2H)_n$$

where n = 1 to 3, and where R has at least 10-n carbon atoms and is a saturated or unsaturated aliphatic (linear or branched), cycloaliphatic, aliphatic-aromatic, aromatic-aliphatic, or aromatic group, unsubstituted or substituted by one or more hydroxyl, chloro, bromo, ester, ether, nitro or amide groups.

The RIM elastomers are useful, for example, as automobile body parts.

EP 0 154 400 A1

Croydon Printing Company Ltd.

# REACTION INJECTION MOULDED ELASTOMERS CONTAINING HIGH MOLECULAR WEIGHT ORGANIC ACIDS

This invention concerns the field of reaction injection moulded (RIM) elastomers.

US-A-4 254 069 and 4 272 618 concern the curing of RIM polyurethane elastomers. In the Glossaries of these patents, a "polyol" is defined as a difunctional or higher functional high molecular weight alcohol or an amine-terminated polyether. The discussion of chain extenders in these patents discloses low molecular weight hydroxy-terminated molecules; e.g., ethylene glycol. The actual examples, however, are of polyether polyurethanes using polyols (hydroxyl-terminated) of high molecular weight. The chain extenders, ethylene glycol and monoethanolamine, were used as crosslinkers.

US-A-3 838 076 discloses foams made from amine-terminated polyethers, with 10 to 50% of amine termination.

US-A-4 246 363 claims a RIM polyurethane composition derived from at least three different active hydrogencontaining materials, having specific relationships to one another, and specific reactivity and solubility parameters. Examples 22 and 23 of US-A-4 246 363 use JEFFAMINE D-2000, diethylene glycol and the reaction product of one mol of aminoethylethanolamine with three mols of propylene oxide.

US-A-4 379 100 describes, for example at column 4, lines 34-43, a polyurethane RIM process wherein carboxyl-function internal mould release agents are used.

US-A-4 396 729 describes RIM processes and materials made from high molecular weight amine-terminated polyethers (used in this invention), amine-terminated chain extenders, polyisocyanates and internal mould release agents, such as those mentioned in US-A-4 379 100.

US-A-4 376 834 describes "polyurethane" materials prepared from amine-terminated polyethers, hydroxyl-terminated chain extenders and polyisocyanates.

Moreover, US-A-4 269 945 describes a process for preparing RIM polyurethanes wherein a relatively high molecular weight hydroxyl-containing polyol, a chain extender and a polyisocyanate are used. The chain extender may be an aliphatic amine-containing material having at least one primary amino group.

The present invention relates to a reaction injection moulded (RIM) elastomer comprising a cured reaction product of ingredients comprising primary or secondary amine terminated polyethers of molecular weight above 2,500 having more than 50% of their active hydrogens in the form of amine hydrogens, a chain extender, an aromatic polyisocyanate and a carboxylic acid having at least 10 carbon atoms. It has been discovered that these acids add green strength, and aid mould release of the moulded part, which will facilitate commercial production.

The amine-terminated polyethers useful in this invention include primary and secondary amine-terminated polyether polyols having an average molecular weight of at least 2,500 and a functionality from 2 to 6, preferably from 2 to 3. Mixtures of amine-terminated polyethers may be used. In a preferred embodiment the amine-terminated polyethers have an average molecular weight of at least 4,000. An especially preferred embodiment uses amine-terminated polyethers with an average molecular weight of at least 5,000.

The amine-terminated polyether resins useful in this invention are polyether resins made from an appropriate initiator to which lower alkylene oxides, such as ethylene oxide, propylene oxide, butylene oxide or mixtures thereof, are added, with resulting hydroxyl-terminated polyol then being aminated. When two or more oxides are used, they may be present as random mixtures, or as blocks of the respective polyethers. In the amination step, it is highly desirable that the terminal hydroxyl groups in the polyol be substantially all secondary hydroxyl groups, for ease of amination. Normally, the amination step does

not completely replace all the hydroxyl groups in the amine group, although the majority of hydroxyl groups are replaced by amino groups. Therefore, the amine-terminated polyether resins useful in this invention have more than 50% of their active hydrogens in the form of amine hydrogens. If ethylene oxide is used, it is desirable to cap the hydroxyl-terminated polyol with a small amount of higher alkylene oxide, to ensure that the terminal hydroxyl groups are substantially all secondary hydroxyl groups. The polyols so prepared may then be reductively aminated as outlined in US-A-3 654 370.

In the practice of this invention, a single high molecular weight amine-terminated polyether resin may be used. Alternatively, mixtures of high molecular weight amine-terminated polyols, such as mixtures of di- and trifunctional materials, and/or materials of different molecular weight or different chemical composition may be used.

The chain extenders useful in this invention include low molecular weight linear diols, such as 1,4-butane diol, propylene glycol and ethylene glycol. Ethylene glycol is especially preferred. Other chain extenders, including cyclic diols such as 1,4-cyclohexane diol would also be suitable as chain extenders in the practice of this invention. These chain extenders may be used alone or in combination.

The aromatic amine-terminated chain extenders useful in this invention include, for example, 1-methyl-3,5-diethyl-2,4- or -2,6-diaminobenzene (both of these materials are also called diethyltoluene diamine or DETDA); 1,3,5-triethyl-2,6-diaminobenzene; 3,5,3',5'-tetraethyl-4,4"-diaminodiphenylmethane, and the like. Particularly preferred aromatic diamine chain extenders are 1-methyl-3,5-diethyl-2,4-diaminobenzene or a mixture of this compound with 1-methyl-3,5-diethyl-2,6-diaminobenzene. It is within the scope of this invention to include some aliphatic chain extender materials as described in US-A-4 246 363 and 4 269 945.

A wide variety of aromatic polyisocyanates may be used according to the present invention. Typical aromatic polyisocyanates include p-phenylene diisocyanate, polymethylene polyphenylisocyanate, 2,6-toluene diisocyanate, dianisidine diisocyanate, bitolylene diisocyanate, naphthalene-1,4-diisocyanate, bis-(4-isocyanatophenyl)-methane, bis-(3-methyl-3-isocyvantophenyl)-methane, bis-(3-methyl-4-isocyanatophenyl)-methane, and 4,4'-diphenylpropane diisocyanate.

Other aromatic polyisocyanates that can be used in the practice of the invention are methylene-bridged polyphenyl polyisocyanate mixtures which have a functionality of from 2 to about 4. These latter isocyanate mixtures are generally produced by the phosgenation of corresponding methylene bridged polyphenyl polyamines, which are conventionally produced by the reaction of formaldehyde and primary aromatic amines, such as aniline, in the presence of hydrochloric acid and/or other acidic catalysts. Known processes for preparing polyamines and corresponding methylene-bridged polyphenyl polyisocyanates therefrom are described in the literature and in many patents, for example, US-A-2 683 730; 2 950 263; 3 012 008; 3 344 162 and 3 362 979.

Usually methylene-bridged polyphenyl polyisocyanate mixtures contain 20 to 100 weight % of methylene diphenyldiisocyanate isomers, with any remainder being polymethylene polyphenyl diisocyanates having higher functionalities and higher molecular weights. Typical of these are polyphenyl polyisocyanate mixtures containing 20 to 100 weight % of methylene diphenyldiisocyanate isomers, of which 20 to 95 weight % thereof is the 4,4'-isomer with the remainder being polymethylene polyphenyl polyisocyanates of higher molecular weight and having an average functionality of from 2.1 to 3.5. These isocyanate mixtures are known, commercially available materials and can be prepared by the process described in US-A-3 362 979.

By far the most preferred aromatic polyisocyanate is methylene bis-(4-phenylisocyanate) or MDI. This can be used in the form of pure MDI, quasi- prepolymers of MDI, modified pure MDI, etc., to prepare suitable RIM elastomers. Since pure MDI is a solid and is therefore often inconvenient to use, liquid products based on MDI are often used and are included in the scope of the terms MDI or methylene bis-(4-phenylisocyanate) used herein. US-A-3 394 164 is an example of a document disclosing a liquid MDI product. More generally uretonimine-modified pure MDI is included also. This product is made by heating pure distilled MDI in the presence of a catalyst. The liquid product is a mixture of pure MDI and modified MDI:

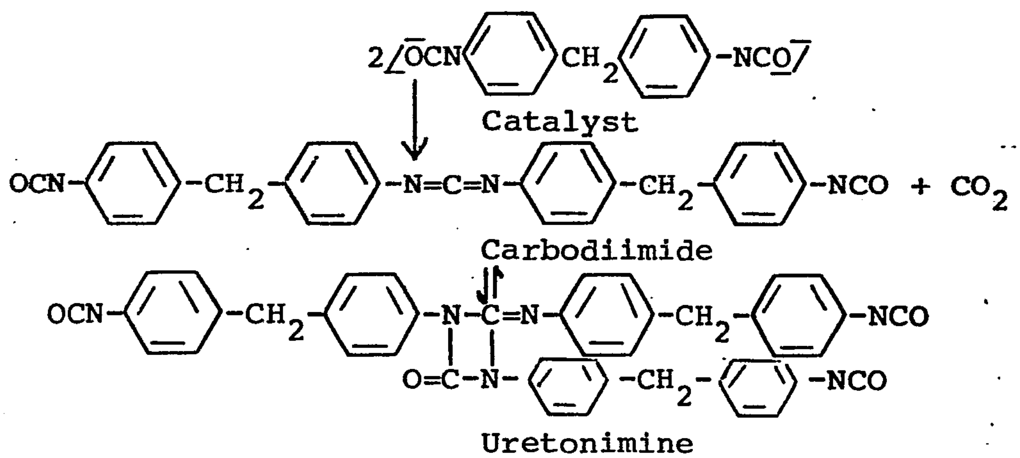


Examples of commercial materials of this type are Upjohn's ISONATE 125M (pure MDI) and ISONATE 143L ("liquid" MDI). Preferably the amount of isocyanates used is the stoichiometric amount, based on all the ingredients in the formulation, or a larger than stoichiometric amount.

Of course, the term "polyisocyanate" also includes quasi-prepolymers of polyisocyanates with active hydrogencontaining materials.

Catalysts, such as tertiary amines, or an organic tin compound, or other polyurethane catalysts, may be used. The organic tin compound may be a stannous or stannic compound, such as a stannous salt of a carboxylic acid, a trialkyltin oxide, a dialkyltin dihalide, a dialkyltin oxide, etc., wherein the organic groups of the

organic portion of the tin compound are hydrocarbon groups having from 1 to 8 carbon atoms. For example, dibutyltin dilaurate, dibutyltin diacetate, diethyltin diacetate, dihexyltin diacetate, di-2-ethylhexyltin oxide, dioctyltin dioxide, stannous octoate, stannous oleate, etc., or a mixture thereof, may be used.

Tertiary amine catalysts include trialkylamines (e.g. trimethylamine or triethylamine), heterocyclic amines, such as N-alkylmorpholines (e.g. N-methylmorpholine, N-ethylmorpholine or dimethyldiaminodiethylether), 1,4-dimethylpiperazine, triethylenediamine, etc., and aliphatic polyamines such as N,N,N'N'-tetramethyl-1,3-butanediamine.

The carboxylic acids useful in this invention are chosen from those having the formula:

$$R(CO_2H)_n$$

where n = 1 to 3, and where R has at least 10-n carbon atoms and is a saturated or unsaturated aliphatic (linear or branched), cycloaliphatic, aliphatic-aromatic, aromatic-aliphatic, or aromatic group, unsubstituted or substituted by one or more hydroxyl, chloro, bromo, ester, ether, nitro or amide groups. Examples of useful acids include n-decanoic acid, neodecanoic acid, sebacic acid, p-butylbenzoic acid, 10-undecenoic acid, dodecanoic acid, 12-hydroxystearic acid, tridecanoic acid, lauric acid, myristic acid, palmitic acid, stearic acid, isostearic acid, oleic acid, linoleic acid, arachidonic acid and

behenic acid. Polyunsaturated fatty acids such as linoleic acid may be converted into di- or trifunctional carboxylic acids. Dimer and trimer acids are of this type, as is Westvaco's DIACID, a $C_{21}$ dicarboxylic acid. Resin acids may be used. These are polycyclic $C_{20}$ carboxylic acids found in tall oil. The half ester of terephthalic acid and 2-ethylhexanol is an example of an acid containing a functional group. These acids may be used alone or in mixtures. They may be natural or synthetic in origin.

The preferred carboxylic acids are liquids although the performance appears to be equally good for many acids. Oleic acid is typical of the preferred liquid acids.

Other conventional formulation ingredients may be employed as needed, for example, foam stabilizers, also known as silicone oils, or emulsifiers. The foam stabilizers may be an organic silane or siloxane. For example, compounds may be used having the formula:

$$R'Si[O-(R'_2SiO)_n-(oxyalkylene)_mR']_3$$

wherein R' is alkyl having from 1 to 4 carbon atoms; n is 4 to 8; m is 20 to 40; and the oxyalkylene groups are derived from propylene oxide or ethylene oxide, see, for example, US-A-3 194 773.

Reinforcing materials, if desired, useful in the practice of the present invention are known to those skilled in the art. For example, chopped or milled glass fibres, chopped or milled carbon fibres and/or other mineral fibres are useful.

Post-curing of the RIM elastomer of the invention is desirable. Post-curing will improve some properties, such as heat sag. Employment of post-curing depends on the desired properties of the end product.

The Examples which follow exemplify the improvement obtained by the process of this invention. These Examples are not, however, intended to limit the scope of the invention.

Each of the formulations in the Examples which follow were processed on an Accuratio VR-100 high pressure impingement mixing RIM machine. The impingement mixing pressures were 14 MPa and the material was injected into a steel flat plaque mould after mixing. The mould is milled to produce plaques which are 460 x 460 x 3 mm. The mould temperature is typically 65 to 70°C.

EXAMPLE 1

A RIM elastomer with the following formulation was formed in a mould after injection by a RIM machine:

B-Component

| | |
|---|---|
| JEFFAMINE T-4300, pbw | 62.33 |
| Diethyltoluene diamine (DETDA), pbw | 18.9 |
| Dow-Corning Q2-7119 fluid, pbw | 0.7 |
| Stearic acid, pbw | 0.44 |

A-Component

| | |
|---|---|
| Upjohn Code 205, pbw | 59.14 |

The above formulations had better hot tear strength (18.6 N/m) than the same formulations without the stearic acid (about 15.8 N/m). Thus, it had better green strength. It also appeared to release better than the elastomer without the stearic acid.

EXAMPLE 2

A RIM elastomer with the following formulation was formed in a mould after injection by a RIM machine:

B-Component

| | |
|---|---|
| JEFFAMINE T-5000, pbw | 42.2 |
| DETDA, pbw | 17.7 |
| Oleic acid, pbw | 1.4 |
| Dow-Corning Q2-7119 fluid, pbw | 0.7 |

A- Component

| | |
|---|---|
| Upjohn Code 231, pbw | 72.55 |

The above formulation had better hot tear strength (19.6 N/m) than the same formulation without the oleic acid (9.5 N/m). Thus, it had improved and excellent "green strength". It also appeared to release better from the mould than a composition without the oleic acid.

EXAMPLE 3

A RIM elastomer with the following formulation was formed in a mould after injection by a RIM machine:

B-Component

| | |
|---|---|
| JEFFAMINE T-5000, pbw | 42.2 |
| DETDA, pbw | 17.7 |
| Dimer acid (Emery), pbw | 1.4 |

A- Component

| | |
|---|---|
| Upjohn Code 231, pbw | 74.97 |

The elastomer with the dimer acid had excellent hot tear strength (21.0 N/m) compared to the same elastomer without dimer acid (12.3 N/m). Thus, it had improved and excellent "green strength".

EXAMPLE 4

A RIM elastomer of the same formulation as in Example 3, except that it had 1.4 pbw of neo-decanoic acid instead of dimer acid, was produced in this Example. It had improved hot tear strength (20.5 N/m) compared to the same elastomer without neo-decanoic acid (12.3 N/m).

EXAMPLE 5

A RIM elastomer identical to that of Example 3, except that it had 1.4 pbw of Acintol EPG, a tall oil fatty acid, instead of dimer acid was produced in this Example. It had improved hot tear strength (18.4 N/m) compared to the same elastomer without the Acintol EPG (12.3 N/m).

EXAMPLE 6

A RIM elastomer identical to that of Example 3, except that it had 1.4 pbw of isostearic acid, instead of dimer acid, was produced in this Example. It had improved hot tear strength (18.0 N/m) compared to the same elastomer without isostearic acid (12.3 N/m).

## GLOSSARY

JEFFAMINE T-4300 - An approximately 4,300 molecular weight all propylene oxide amine-terminated polyether.

JEFFAMINE T-5000 - An approximately 5,000 molecular weight all propylene oxide amine-terminated polyether.

Upjohn Code 205 - A quasi-prepolymer consisting of a 2:1 by weight blend of ISONATE 143L and THANOL SF-5505.

Upjohn Code 231 - A quasi-prepolymer consisting of a 1:1 by weight blend of ISONATE 143L and THANOL SF-5505.

Dimer Acid (Emery) - A $C_{36}$ liquid aliphatic acid produced by the polymerization of unsaturated fatty acids.

ISONATE 143L - Pure MDI isocyanate modified so that it is a liquid at ambient temperatures. A product of the Upjohn Co.

THANOL SF-5505 - A 550 molecular weight polyether triol containing approximately 80% primary hydroxyl groups.

Dow-Corning Q2-7119 - A dimethylsiloxane release agent. A product of Dow-Corning. See US-A-4 379 100, col. 4, lines 34-43.

CLAIMS:

1. A reaction injection moulded elastomer comprising the reaction product of ingredients comprising primary or secondary amine-terminated polyethers having a molecular weight above 2,500, and more than 50% of their active hydrogens in the form of amine hydrogens, a chain extender, and an aromatic polyisocyanate characterized in that the ingredients also include a carboxylic acid of the formula

$$R(CO_2H)_n$$

where n = 1 to 3, and where R has at least 10-n carbon atoms and is a saturated or unsaturated aliphatic (linear or branched), cycloaliphatic, aliphatic-aromatic, aromatic-aliphatic, or aromatic group, unsubstituted or substituted by one or more hydroxyl, chloro, bromo, ester, ether, nitro or amide groups.

2. An elastomer according to claim 1 characterized in that the chain extender is amine-terminated.

3. An elastomer according to claim 1 characterized in that the acid is oleic acid.

4. A method for making a reaction injection moulded elastomer comprising reacting, in a closed mould, ingredients comprising primary or secondary amine-terminated polyethers having a molecular weight above 2,500, and having more than 50% of their active hydrogens in the form of amine hydrogens, a chain extender and an aromatic polyisocyanate characterized in that the ingredients also include a carboxylic acid of the formula

$$R(CO_2H)_n$$

where n = 1 to 3, and where R has at least 10-n carbon atoms and is a saturated or unsaturated aliphatic (linear

or branched), cycloaliphatic, aliphatic-aromatic, aromatic-aliphatic, or aromatic group, unsubstituted or substituted by one or more hydroxyl, chloro, bromo, ester, ether, nitro or amide groups.

European Patent Office

# EUROPEAN SEARCH REPORT

0154400

Application number

EP 85 30 0547

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 081 701 (BAYER)<br>* Page 4, line 24 - page 5, line 7; page 12, line 4 - page 13, line 3; claims 1-5 *<br>--- | 1-4 | C 08 G 18/50<br>C 08 G 18/66<br>C 08 K 5/09<br>B 29 C 33/60 |
| Y | EP-A-0 093 861 (TEXACO DEVELOPMENT)<br>* Page 2, line 22 - page 3, line 1; page 7, lines 9-13; claims 1-7 * & US-A-4 396 729 (Cat. D)<br>--- | 1-4 | |
| Y | US-A-4 098 731 (W. VON BONIN et al.)<br>* Column 2, lines 24-40; column 3, lines 20-25; claims 1-7 *<br>--- | 1-4 | |
| A | FR-A-2 135 266 (BAYER)<br>* Page 3, lines 6-15; page 4, lines 4-7, 25-26, 35-36; page 9, lines 24-38; page 10, lines 18-20; claim 1 *<br>--- | 1-4 | TECHNICAL FIELDS SEARCHED (Int. Cl.4)<br>C 08 G 18/50<br>C 08 L 71/02<br>C 08 L 75/08<br>C 08 K 5/09 |
| A | DE-A-3 221 704 (GENERAL ELECTRIC)<br>* Page 8, paragraph 5; claims 1-3 *<br>----- | 1,3,4 | |

The present search report has been drawn up for all claims

| Place of search | Date of completion of the search | Examiner |
|---|---|---|
| BERLIN | 07-05-1985 | BOURGONJE A.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document